# EUROPEAN PATENT SPECIFICATION

(11) **EP 2 431 150 B1**
(45) Date of publication and mention of the grant of the patent: **23.08.2017**
(21) Application number: 10774909.5
(22) Date of filing: 11.05.2010
(51) Int. Cl.: B29C 45/14, B29C 45/16, B32B 27/00, B29L 9/00, C08J 7/04

(54) **TRANSFER SHEET AND PROCESS FOR PRODUCING SAME**
ÜBERTRAGUNGSPLATTE UND VERFAHREN ZU IHRER HERSTELLUNG
FEUILLE DE TRANSFERT ET PROCÉDÉ POUR PRODUIRE CELLE-CI

(30) Priority: 12.05.2009 JP 2009115478
(43) Date of publication of application: 21.03.2012
(73) Proprietor: Daikin Industries, Ltd., Osaka 530-8323 (JP)
(72) Inventor: HANAZAWA, Makoto, Settsu-shi Osaka 566-8585 (JP); FUKUDA, Teruyuki, Settsu-shi Osaka 566-8585 (JP); IMAMURA, Ami, Osaka 567-0828 (JP)
(74) Representative: Hoffmann Eitle
(86) International application number: PCT/JP2010/057959
(87) International publication number: WO 2010/131652

(56) References cited:
- JP-A- 2006 119 345
- JP-A- 2008 040 262
- JP-A- 2009 034 846
- JP-A- 2009 058 674
- DATABASE CA [Online] CHEMICAL ABSTRACTS SERVICE, COLUMBUS, OHIO, US; 11 May 1988 (1988-05-11), Jpn. Kokai Tokkyo Koho: "Thermal transfer materials with a hardened film made from fluorine-containing monomers", XP002741609, Database accession no. 108:214065 -& JP S62 227786 A (TOYO INK MFG CO) 6 October 1987 (1987-10-06)
- DATABASE CA [Online] CHEMICAL ABSTRACTS SERVICE, COLUMBUS, OHIO, US; 20 May 2004 (2004-05-20), Jpn. Kokai Tokkyo Koho: "Transfer sheet for decalcomania and formation of pattern using the sheet", XP002741610, Database accession no. 140:359048 -& JP 2004 130585 A (NIPPON PAINT CO LTD; FUKUDA METAL FOIL POWDER) 30 April 2004 (2004-04-30)
- R. BONGIOVANNI ET AL: "Acrylic polyester resins containing perfluoropolyethers structures: Synthesis, characterization, and photopolymerization", JOURNAL OF APPLIED POLYMER SCIENCE, vol. 75, no. 5, 31 January 2000 (2000-01-31), pages 651-659, XP055198702, ISSN: 0021-8995, DOI: 10.1002/(SICI)1097-4628(20000131)75:5<651: :AID-APP7>3.0.CO;2-P

## Description

### Technical Field

The present invention relates to an antifouling (or soil-resistant) transfer sheet which is used for the production of molded resin articles such as optical articles, automobile parts and office equipments, and a process for manufacturing the transfer sheet.
In particular, the present invention relates to the soil-resistant transfer sheet, the process for manufacturing the same, a molding process utilizing the same and a molded article obtained by the molding process.

### Background Art

Transfer sheets having desired functions are used for the purpose of providing various functions on the external surface of the molded resin article such as the optical articles, the automobile parts and the office equipments. These functions are provisions of soil-resistant properties, antistatic properties, hardness, aesthetic properties, etc. Among these functions, especially as for the optical articles, required is the function of providing the soil-resistant properties in order to prevent, for example, an adherence of finger prints on the surface of an image display. The soil-resistant transfer sheet has a soil-resistant layer formed by coating and drying a soil-resistant agent on the surface of the substrate sheet.
In the past, as the soil-resistant transfer sheet for affording the soil-resistant properties, a trial of introducing a fluorine-containing resin film on the outermost layer has been known from JP-A-9-131749.
However, the surface soil-resistant performance of the fluorine-containing resin film is not sufficient and many problems still remain to be solved in its actual use in order to ensure the surface hardness, adhesiveness and durability of the film. And, if the release property of the substrate sheet from the soil-resistant layer is low after transferring the soil-resistant layer to the surface of the molded resin article, the mold releasing of the substrate sheet will cause a simultaneous (partial) destruction of the soil-resistant layer, and the destruction will cause lowering of the soil-resistant performance. Therefore, a soil-resistant layer having high mold release properties has been investigated.

JP-A-1987-227786 describes a thermal transfer material wherein a thermally transferrable ink layer is provided on a base film having on its back side an anti-sticking layer which is a hardened film of a coating material comprising a fluorine-containing monomer having a radical-polymerizable double bond. This hardened film serves to prevent the base layer to be broken, prevent foreign matter to be adhered to a thermal head and obviate heat loss in a high-speed printing process using a thermal head for transferring the thermally transferrable ink layer.

JP-A-2004-130585 discloses a transfer sheet and a pattern forming method using the same. The transfer sheet comprises, arranged in this order, a base film (1), a clear layer (2), a patterned layer (3) of metallic-foil powder (6), a coating and fixing layer (4) which may be made from, among others, acrylic resin and which fixes the powder (6), and an adhesive layer (5). This transfer sheet enables a lacquering-tinged pattern of a metal foil powder to be formed on a base material by transfer.

JP-A-2009-058674 is directed to a method of manufacturing an optical filter (60) for a display by using a roll body (15, 30) of an electromagnetic shield film (20), wherein the method comprises (i) laminating a long near infra-red absorbing film (32) on a long transparent substrate (electromagnetic shield film) (20) to obtain a long layered film (33), (ii) preparing a functional layer (50) on the long layered film (33) to obtain an long optical filter, and (iii) cutting the long optical filter to obtain optical filter (60) for a display. The functional layer (50) preferably is prepared by transferring sheets of a functional layer transfer film.

### SUMMARY OF INVENTION

### Problems to be solved by the invention

Objects of the invention relate to a transfer sheet which is excellent in soil-resistant properties such as anti-adherence properties of a finger print and mold releasing properties, a process for producing the transfer sheet, a process for producing a soil-resistant molded resin article by using the transfer sheet, and the soil-resistant molded resin article produced by the process.

### Means to solve the problems

The present invention relates to a soil-resistant transfer sheet which comprises, in the following order,
(i) a substrate sheet (a),
(ii) a soil-resistant layer (b),
(iii) a coating layer (c), and
(iv) optionally an adhesive layer (d),
wherein
- a surface of the soil-resistant layer, which reveals after the substrate sheet (a) is removed, has a contact angle with water of 100° or larger and a contact angle with hexadecane of 40° or larger,
- the soil-resistant layer (b) is a layer obtained from a soil-resistant composition comprising a fluorine-containing compound having a polymerizable double bond,
- the coating layer (c) is formed from a polymerizable coating monomer or resin,
- the polymerizable coating monomer is selected from acrylate monomers, vinyl alcohols, vinyl acetate and vinyl ethers, and
- the coating resin is a curable resin.

The present invention also relates to a process for producing the soil-resistant transfer sheet comprising the steps of:
- forming the soil-resistant layer (b) by applying the soil-resistant composition to the substrate sheet (a),
- forming the coating layer (c) by applying a polymerizable coating composition to the soil-resistant layer (b), and
- curing the soil-resistant composition and the polymerizable coating composition. Alternatively, the process for producing the soil-resistant transfer sheet comprises the steps of:
- forming the soil-resistant layer (b) by applying and curing the soil-resistant composition on the substrate sheet (a), and
- forming the coating layer (c) by applying and curing a polymerizable coating composition to the soil-resistant layer (b).

The present invention further relates to a process for producing a soil-resistant molded resin article, wherein the soil-resistant transfer sheet is used. The process is preferably an in-mold labeling (or in-mold decoration).

The present invention also relates to the soil-resistant molded resin article produced by said process.

### Effects of the invention

The present invention provides the soil-resistant transfer sheet which is excellent in the soil-resistant properties such as anti-adhesive of finger prints and excellent in the mold releasing properties, and provides the process for producing the transfer sheet. The present invention provides the process for producing the soil-resistant molded resin article by using the soil-resistant transfer sheet excellent in the soil-resistant properties and mold releasing properties, and provides the molded resin-article produced by the process.

### Brief Description of Drawings

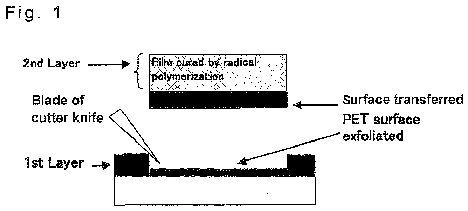

Figure 1 is an illustrative drawing of an evaluation process of static contact angles on the transfer surfaces on the cured hard-coat films obtained in Examples 1 and 2 of the present invention.

### Description of Embodiment

The embodiments of the present invention are described in detail as follows. The present invention relates to the soil-resistant transfer sheet which comprises, in the following order,
(i) a substrate sheet (a),
(ii) a soil-resistant layer (b),
(iii) a coating layer (c), and
(iv) optionally an adhesive layer (d),
wherein
- a surface of the soil-resistant layer, which reveals after the substrate sheet (a) is removed, has a contact angle with water of 100° or larger and a contact angle with hexadecane of 40° or larger,
- the soil-resistant layer (b) is a layer obtained from a soil-resistant composition comprising a fluorine-containing compound having a polymerizable double bond,
- the coating layer (c) is formed from a polymerizable coating monomer or resin,
- the polymerizable coating monomer is selected from acrylate monomers, vinyl alcohols, vinyl acetate and vinyl ethers, and
- the coating resin is a curable resin.
The contact angle with water preferably is 110° or larger. The upper limit of the contact angle with water may be 170°, for example, 150°. The contact angle with hexadecane preferably is 60° or larger, and more preferably 65° or larger. The upper limit of the contact angle with hexadecane may be 170°, for example, 150°, especially 100°. The contact angle is a static contact angle measured by dropping a liquid of 2µL on the surface of the soil-resistant layer from a micro-syringe.

The substrate sheet (a) has the soil-resistant layer (b) and subsequently the coating layer (c), and then optionally the adhesive layer (d), thus giving strength and flexibility to the soil-resistant transfer sheet. The soil-resistant transfer sheet of the present invention can be obtained by homogeneously applying the compositions constituting the above each layer via a method of application such as dipping, spraying or spin-coating. The substrate sheet (a) is removed (or exfoliated) from the transfer sheet after the transfer sheet is transferred to the molded resin article, therefore, the soil-resistant layer comes out on the outermost surface of the molded resin article. Thus, the soil-resistant properties are given to the molded resin article. That is, the substrate sheet functions as an exfoliation (or removing) sheet.
As the substrate sheet, synthetic resin films such as polyethylene terephthalate, polypropylene, polyethylene, polycarbonate, polystyrene, polyvinyl chloride and polyamide are used. Among these, in light of the molding properties, the thermal durability, etc., the most preferred film is a polyethylene terephthalate film (PET) or a polypropylene film both bi-axially stretched. The thickness of the substrate is 3-1000µm, preferably around 5-200µm, and more preferably 16-100µm.

The soil-resistant layer (b), in lights of an excellent compatibility with a diluting agent (especially, a fluorine-free diluting agent), an excellent capability of forming a strong soil-resistant (water-repellant and oil-repellant) coating layer on a metal mold or various substrates and an excellent exfoliation properties, is a soil-resistant layer obtained from a soil-resistant composition comprising a fluorine-containing monomer having a polymerizable double bond, such as a perfluoroacrylate, preferably a perfluoropolyether urethane acrylate.
As the perfluoroacrylate, is exemplified a following fluorine-containing monomer (i) represented by the general formula:

CH₂=C(-X)- C(=O)- Y-Z-Rf (1)

wherein X is H, linear or branched C₁₋₂₁-alkyl, F, Cl, Br, I, -CFX¹X² (wherein X¹ and X² are H, F, Cl, Br or I), cyano, linear or branched C₁₋₂₁-fluoroalkyl, optionally substituted benzyl or optionally substitutedphenyl;
Y is -O- or -NH-;
Z is a C₁₋₁₀ aliphatic group, a C₆₋₁₀ aromatic or cycloaliphatic group,
-CH₂CH₂N(R¹)SO₂- (wherein R¹ is C₁₋₄ -alkyl),
-CH₂CH(OZ¹) CH₂- (wherein Z¹ is H or acetyl),
-(CH₂)ₘ-SO₂-(CH₂)ₙ- or -(CH₂)ₘ-S-(CH₂)ₙ- (wherein m is 1-10 and n is 0-10), and
Rf is linear or branched C₁-₂₁-fluoroalkyl or a C₃-₁₀₀-perfluoropolyether group.

The fluorine-containing monomer (i) is optionally substituted on an α-position (of acrylate or methacrylate) by a halogen atom, etc. Therefore, in the general formula (1), X may be linear or branched C₂-C₂₁ -alkyl, F, Cl, Br, I, -CFX¹X² (wherein X¹ and X² are H, F, Cl, Br or I), cyano, linear or branched C₁₋₂₁-fluoroalkyl, optionally substituted benzyl or optionally substituted phenyl.

In the above formula (1), in the case that Rf is fluoroalkyl, Rf is preferably perfluoroalkyl. The number of carbon atoms of the Rf group may be 1-21, for example, 1-7, especially 4-6, in particular 6. Examples of the Rf group are -CF₃, -CF₂CF₃,-CF₂CF₂CF₃,-CF(CF₃)₂, -CF₂CF₂CF₂CF₃, -CF₂CF(CF₃)₂, -C(CF₃)₃, -(CF₂)₄CF₃, -(CF₂)₂CF(CF₃)₂, -CF₂C(CF₃)₃,-CF(CF₃)CF₂CF₂CF₃, -(CF₂)₅CF₃, -(CF₂)₃CF(CF₃)₂, -(CF₂)₄CF(CF₃)₂, etc.
Especially, -(CF₂)₅CF₃ is preferable.
In the case that the Rf group is a perfluoropolyether group, the Rf group preferably has least one unit selected from the group consisting of a OCF₂ group, a OCF₂CF₂ group, a OCF₂CF₂CF₂ group and a OC(CF₃)FCF₂CF₂ group. The molecular weight of the perfluoropolyether group is preferably 200-500,000, especially 500-100,000.

The non-limiting examples of the fluorine-containing monomer (i) are as follows:

CH₂=C(-H)-C(=O)-O-(CH₂)₂-Rf

CH₂=C(-H)-C(=O)-O-C₆H₄-Rf

CH₂=C(-Cl)-C(=O)-O-(CH₂)₂-Rf

CH₂=C(-H)-C(=O)-O-(CH₂)₂N(-CH₃) SO₂-Rf

CH₂=C(-H)-C(=O)-O-(CH₂)₂N(-C₂H₅) SO₂-Rf

CH₂=C(-H)-C(=O)-O-CH₂CH(-OH) CH₂-Rf

CH₂=C(-H)-C(=O)-O-CH₂CH(-OCOCH₃) CH₂-Rf

CH₂=C(-H)-C(=O)-O-(CH₂)₂-S-Rf

CH₂=C(-H)-C(=O)-O-(CH₂)₂-S-(CH₂)₂-Rf

CH₂=C(-H)-C(=O)-O-(CH₂)₃-SO₂-Rf

CH₂=C(-H)-C(=O)-O-(CH₂)₂-SO₂-(CH₂)₂-Rf

CH₂=C(-H)-C(=O)-NH-(CH₂)₂-Rf

CH₂=C(-CH₃)-C(=O)-O-(CH₂)₂-S-Rf

CH₂=C(-CH₃)-C(=O)-O-(CH₂)₂-S-(CH₂)₂-Rf

CH₂=C(-CH₃)-C(=O)-O-(CH₂)₃-SO₂-Rf

CH₂=C(-CH₃)-C(=O)-O-(CH₂)₂-SO₂-(CH₂)₂-Rf

CH₂=C(-CH₃)-C(=O)-NH-(CH₂)₂-Rf

CH₂=C(-F)-C(=O)-O-(CH₂)₂-S-Rf

CH₂=C(-F)-C(=O)-O-(CH₂)₂-S-(CH₂)₂-Rf

CH₂=C(-F)-C(=O)-O-(CH₂)₂-SO₂-Rf

CH₂=C(-F)-C(=O)-O-(CH₂)₂-SO₂-(CH₂)₂-Rf

CH₂=C(-F)-C(=O)-NH-(CH₂)₂-Rf

CH₂=C(-Cl)-C(=O)-O-(CH₂)₂-S-Rf

CH₂=C(-Cl)-C(=O)-O-(CH₂)₂-S-(CH₂)₂-Rf

CH₂=C(-Cl)-C(=O)-O-(CH₂)₂-SO₂-Rf

CH₂=C(-Cl)-C(=O)-O-(CH₂)₂-SO₂-(CH₂)₂-Rf

CH₂=C(-Cl)-C(=O)-NH-(CH₂)₂-Rf

CH₂=C(-CF₃)-C(=O)-O-(CH₂)₂-S-Rf

CH₂=C(-CF₃)-C(=O)-O-(CH₂)₂-S-(CH₂)₂-Rf

CH₂=C(-CF₃)-C(=O)-O-(CH₂)₂-SO₂-Rf

CH₂=C(-CF₃)-C(=O)-O-(CH₂)₂-SO₂-(CH₂)₂-Rf

CH₂=C(-CF₃)-C(=O)-NH-(CH₂)₂-Rf

CH₂=C(-CF₂H)-C(=O)-O-(CH₂)₂-S-Rf

CH₂=C(-CF₂H)-C(=O)-O-(CH₂)₂-S-(CH₂)₂-Rf

CH₂=C(-CF₂H)-C(=O)-O-(CH₂)₂-SO₂-Rf

CH₂=C(-CF₂H)-C(=O)-O-(CH₂)₂-SO₂-(CH₂)₂-Rf

CH₂=C(-CF₂H)-C(=O)-NH-(CH₂)₂-Rf

CH₂=C(-CN)-C(=O)-O-(CH₂)₂-S-Rf

CH₂=C(-CN)-C(=O)-O-(CH₂)₂-S-(CH₂)₂-Rf

CH₂=C(-CN)-C(=O)-O-(CH₂)₂-SO₂-Rf

CH₂=C(-CN)-C(=O)-O-(CH₂)₂-SO₂-(CH₂)₂-Rf

CH₂=C(-CN)-C(=O)-NH-(CH₂)₂-Rf

CH₂=C(-CF₂CF₃)-C(=O)-O-(CH₂)₂-S-Rf

CH₂=C(-CF₂CF₃)-C(=O)-O-(CH₂)₂-S-(CH₂)₂-Rf

CH₂=C(-CF₂CF₃)-C(=O)-O-(CH₂)₂-SO₂-Rf

CH₂=C(-CF₂CF₃)-C(=O)-O-(CH₂)₂-SO₂-(CH₂)₂-Rf

CH₂=C(-CF₂CF₃)-C(=O)-NH-(CH₂)₂-Rf

CH₂=C(-F)-C(=O)-O-(CH₂)₃-S-Rf

CH₂=C(-F)-C(=O)-O-(CH₂)₃-S-(CH₂)₂-Rf

CH₂=C(-F)-C(=O)-O-(CH₂)₃-SO₂-Rf

CH₂=C(-F)-C(=O)-O-(CH₂)₃-SO₂-(CH₂)₂-Rf

CH₂=C(-F)-C(=O)-NH-(CH₂)₃-Rf

CH₂=C(-Cl)-C(=O)-O-(CH₂)₃-S-Rf

CH₂=C(-Cl)-C(=O)-O-(CH₂)₃-S-(CH₂)₂-Rf

CH₂=C(-Cl)-C(=O)-O-(CH₂)₃-SO₂-Rf

CH₂=C(-Cl)-C(=O)-O-(CH₂)₃-SO₂-(CH₂)₂-Rf

CH₂=C(-CF₃)-C(=O)-O-(CH₂)₃-S-Rf

CH₂=C(-CF₃)-C(=O)-O-(CH₂)₃-S-(CH₂)₂-Rf

CH₂=C(-CF₃)-C(=O)-O-(CH₂)₃-SO₂-Rf

CH₂=C(-CF₃)-C(=O)-O-(CH₂)₃-SO₂-(CH₂)₂-Rf

CH₂=C(-CF₂H)-C(=O)-O-(CH₂)₃-S-Rf

CH₂=C(-CF₂H)-C(=O)-O-(CH₂)₃-S-(CH₂)₂-Rf

CH₂=C(-CF₂H)-C(=O)-O-(CH₂)₃-SO₂-Rf

CH₂=C(-CF₂H)-C(=O)-O-(CH₂)₃-SO₂-(CH₂)₂-Rf

CH₂=C(-CN)-C(=O)-O-(CH₂)₃-S-Rf

CH₂=C(-CN)-C(=O)-O-(CH₂)₃-S-(CH₂)₂-Rf

CH₂=C(-CN)-C(=O)-O-(CH₂)₃-SO₂-Rf

CH₂=C(-CN)-C(=O)-O-(CH₂)₃-SO₂-(CH₂)₂-Rf

CH₂=C(-CF₂CF₃)-C(=O)-O-(CH₂)₃-S-Rf

CH₂=C(-CF₂CF₃)-C(=O)-O-(CH₂)₃-S-(CH₂)₂-Rf

CH₂=C(-CF₂CF₃)-C(=O)-O-(CH₂)₃-SO₂-Rf

CH₂=C(-CF₂CF₃)-C(=O)-O-(CH₂)₂-SO₂-(CH₂)₂-Rf

wherein Rf is fluoroalkyl or a perfluoropolyether group. The component (i) may be a mixture of at least two.

A preferable example of the soil-resistant layer of the present invention is a soil-resistant layer obtained from the soil-resistant composition comprising:
(1) a perfluoroacrylate monomer, for example, a perfluoroalkyl (meth)acrylate (a carbon number of the perfluoroalkyl group is 1-21, preferably, 1-7) or a perfluoropolyether urethane acrylate monomer, or
(2) a perfluoroacrylate monomer.

A particularly preferable soil-resistant layer in the present invention is a soil-resistant layer obtained from a soil-resistant composition containing a carbon-carbon double bond, which comprises:
(A) a triisocyanate prepared by trimerizing a diisocyanate, and
(B) a combination of at least two active hydrogen-containing compounds,
   wherein the component (B) (that is, the active hydrogen-containing compound (B)) comprises:
   (B-1) a perfluoropolyether having at least one active hydrogen, and
   (B-2) a monomer having an active hydrogen atom and a carbon-carbon double bond.

In the present invention, the reaction of the triisocyanate (A) with the component (B), that is, the reaction of an NCO group present in the triisocyanate (A) with an active hydrogen atom present in the component (B) gives a perfluoropolyether-containing compound having at least one carbon-carbon double bond. The composition of the present invention preferably comprises a perfluoropolyether-containing compound having at least one carbon-carbon double bond. The equivalent ratio of the NCO group present in the triisocyanate (A) to the active hydrogen atom present in the component (B) may be 1:at least 1, particularly 1:1.

For example, the reaction of the NCO group present in the triisocyanate (A) with the active hydrogen atom present in the components (B-1) and (B-2) can give a perfluoropolyether-containing compound having at least one carbon-carbon double bond. The components (B-1) and (B-2) may be simultaneously added to the triisocyanate (A), or the components (B-1) and (B-2) may be sequentially added to the triisocyanate (A). The total amount of the active hydrogen possessed by the component (B-1) and the active hydrogen possessed by the component (B-2) may be 3 mol, relative to 1 mol of the triisocyanate (A). The amount of the component (B-1) may have a lower limit of 0.0001 mol, for example, 0.01 mol, particularly 0.1 mol , and an upper limit of 2 mol, for example, 1.5 mol, particularly 1.0 mol, based on 1 mol of the triisocyanate (A). The amount of component (B-1) may be, for example, 0.0001-2 mol, particularly 0.01-1.2 mol based on 1 mol of the triisocyanate (A). The amount of the component (B-2) may have a lower limit of 1 mol, for example, 1.2 mol, particularly 1.5 mol, and an upper limit of 2.5, for example, 2.0 mol, particularly 1.8 mol, based on 1 mol of the triisocyanate (A). The amount of the component (B-2) may be, for example, 1.0-2.5 mol, particularly 1.2-2.0 mol based on 1 mol of the triisocyanate (A).

The component (B) may further contain (B-3) a compound having an active hydrogen atom. The perfluoropolyether-containing compound having at least one carbon-carbon double bond can be obtained by reacting the component (A) with the components (B-1), (B-2) and (B-3). The components (B-1), (B-2) and (B-3) may be simultaneously added to the triisocyanate (A), or the components (B-1), (B-2) and (B-3) may be sequentially (the addition order is not limited to the description order.) added to the triisocyanate (A).
Preferably, at least 1 mol of the component (B-2) is reacted with the isocyanate group present in the triisocyanate (A), and the remaining NCO group is reacted with the component (B-1) and the component (B-3). The total amount of the active hydrogen possessed by the component (B-1), (B-2) and (B-3) is preferably at least 3 mol, particularly 3 mol, relative to 1 mol of the triisocyanate (A).

In the present invention, the perfluoropolyether having carbon-carbon double bond and raw materials for obtaining the perfluoropolyether having carbon-carbon double bond (that is, the components (A) and (B)) can be homogeneously dispersed in a diluent (for example, a solvent and an acrylic monomer).

The triisocyanate (A) is a triisocyanate prepared by trimerizing a diisocyanate. Examples of diisocyanate used for giving the triisocyanate (A) include diisocyanates having aliphatically bonded isocyanate groups, for example, hexamethylene diisocyanate, isophorone diisocyanate, xylylene diisocyanate, hydrogenated xylylene diisocyanate and dicyclohexylmethane diisocyanate; and diisocyanates having aromatically bonded isocyanate groups, for example, tolylene diisocyanate, diphenylmethane diisocyanate, polymethylenepolyphenyl polyisocyanate, tolidine diisocyanate and naphthalene diisocyanate.

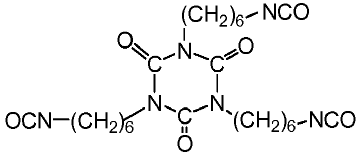

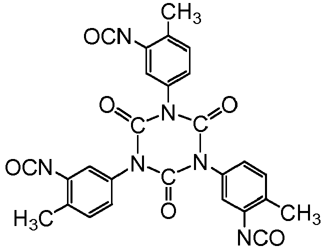

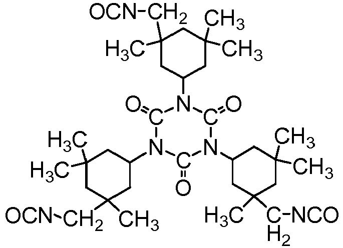

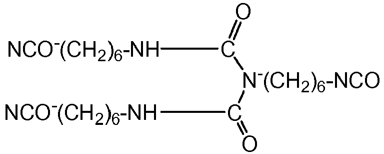

The component (B) comprises:
(B-1) a perfluoropolyether having at least one active hydrogen atom (for example, an active hydroxyl group),
(B-2) a monomer having an active hydrogen atom and a carbon-carbon double bond, and
(B-3) optionally present, a compound having an active hydrogen atom (for example, an active hydroxyl group). The active hydrogen atom is present in an active hydrogen-containing group such as an active hydroxyl group.
The perfluoropolyether (B-1) is a compound having one hydroxyl group at one molecular end or one hydroxyl group at each of both ends, in addition to a perfluoropolyether group. The perfluoropolyether (B-1) is preferably a compound of the general formula: 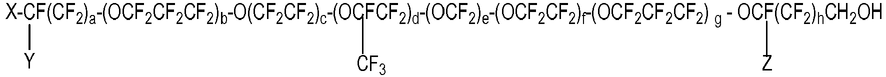
wherein X is F or -CH₂OH,
Y and Z are F or trifluoromethyl,
a is an integer of 1-16, c is an integer of 0-5, b, d, e, f and g are an integer of 0-200, and h is an integer of 0-16.

The monomer (B-2) having active hydrogen and carbon-carbon double bond is preferably a (meth)acrylate ester or vinyl monomer having active hydrogen, particularly a hydroxyl group. Examples of the monomer (B-2) include the following:
hydroxyethyl (meth)acrylate
aminoethyl (meth)acrylate
HO(CH₂CH₂O)ᵢ-COC(R)C=CH₂ (R: H, CH₃, i=2-10),
CH₃CH(OH)CH₂OCOC(R)C=CH₂ (R: H, CH₃ ; 2-hydroxy-propyl (meth)acrylate),
CH₃CH₂CH(OH)CH₂OCOC(R)C=CH₂ (R: H, CH₃ ; 2-hydroxy-butyl (meth)acrylate), C₆H₅OCH₂CH(OH)CH₂OCOC(R)C=CH₂ (R: H, CH₃ ; 2-hydroxy-3-phenoxypropyl (meth)acrylate),
allyl alcohol,
HO(CH₂)ₖCH=CH₂ (k=2-20)
(CH₃)₃SiCH(OH)CH=CH₂, and
styryl phenol.

The compound (B-3) having active hydrogen is preferably a compound which has neither a perfluoropolyether group nor a carbon-carbon double bond and which has at least one active hydrogen. Preferable examples of the compound (B-3) include the following: a monohydric alcohol comprising a linear or branched hydrocarbon having 1 to 16 carbon atoms, a secondary amine comprising a linear or branched hydrocarbon having 1-16 carbon atoms, a secondary amine having an aromatic group, 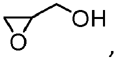 an Rf alcohol: Q(CF₂)ₗ(CH=CH)ₘ(CHI)ₙ(CH₂)ₒOH (wherein Q is H, F or (CF₃)₂CF-, I is an integer of 1-10, m and n is an integer of 0-1 and o is an integer of 1-10), a polyalkyleneglycol monoester; for example, R(OCH₂CH₂)ₚOH, R(OCH₂CH₂CH₂)_{q}OH (R is a linear or branched hydrocarbon, an acetyl group, or an alkylphenoxy group having 1-16 carbon atoms, and p and q are an integer of 1-20), an aromatic alcohol, a silane compound having active hydrogen, (CH₃)₃Si(CH₂)ₛOH (wherein s is an integer of 1-20), [(CH₃)₃]₂NH, 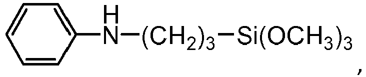 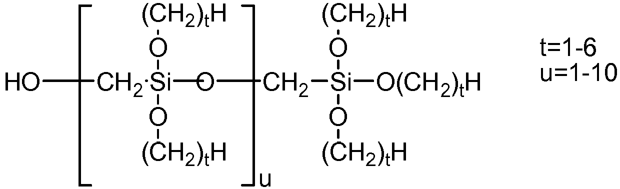 and

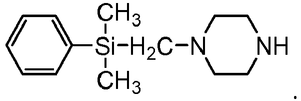

The reaction for giving the perfluoropolyether-containing compound having carbon-carbon double bond may be as follows:

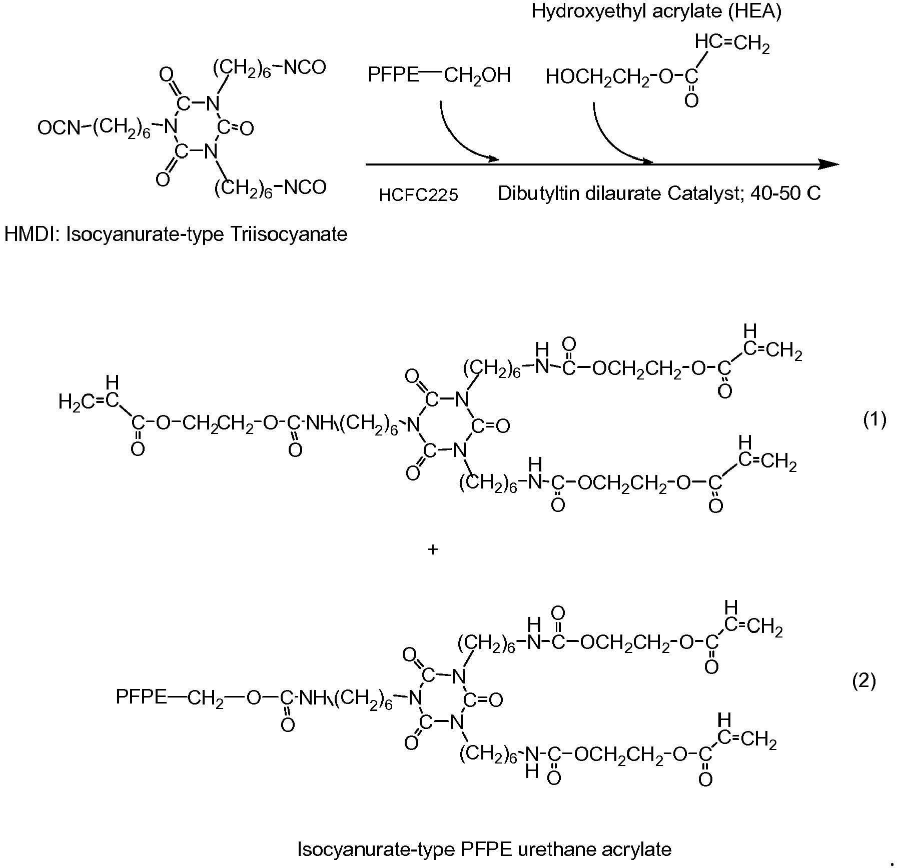

Specific examples of the perfluoropolyether-containing compound having carbon-carbon double bond obtained by using the third component (that is, the component (B-3)) include a compound of the following chemical formula:

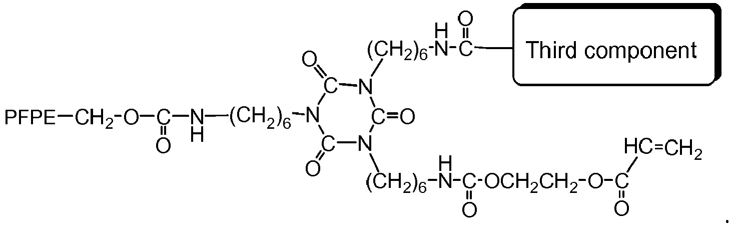

The perfluoropolyether-containing compound having carbon-carbon double bond may be the compound of the above formula, wherein a first isocyanate group projecting from an isocyanurate ring reacts with the component (B-1), a second isocyanate group reacts with the component (B-2), and a third isocyanate group reacts with the component (B-3).

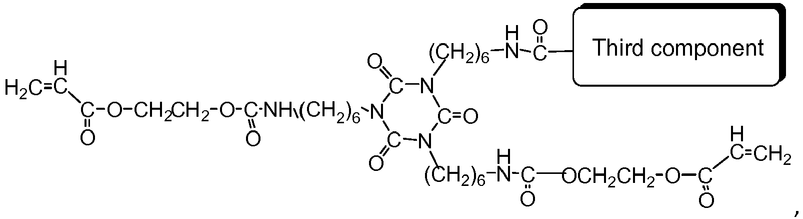

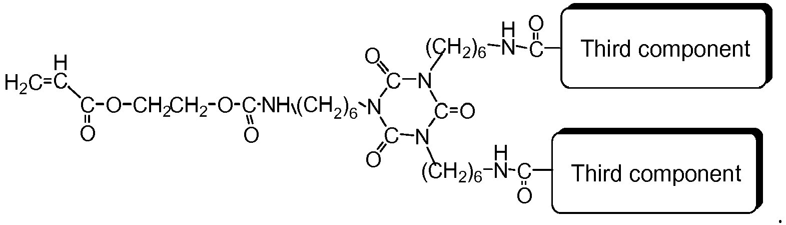

Preferably, in the perfluoropolyether-containing compound having carbon-carbon double bond, each isocyanate group projecting from the isocyanurate ring reacts with only one molecule of each of the components (B-1), (B-2) and (B-3), and the reacted components (B-1), (B-2) and (B-3) make no reaction with any other compound to form an end.

The perfluoropolyether-containing compound having carbon-carbon double bond is a compound having at least one molecule of the component (B-2) bonded to one isocyanate group. The remaining two isocyanate groups may react with and bond to any of the components (B-1), (B-2) and (B-3).
The perfluoropolyether-containing compound can be a mixture wherein different type of the components (B-1), (B-2) and (B-3) bond to the remaining two isocyanate groups.

A mixture of the perfluoropolyether-containing compounds can contain:
a perfluoropolyether-containing compound molecule which does not bond to the component (B-1),
a perfluoropolyether-containing compound molecule which bonds to one molecule of the component (B-1), and/or
a perfluoropolyether-containing compound molecule which bond to two molecules of the component (B-1).
In the mixture of the perfluoropolyether-containing compounds, the amount of the perfluoropolyether-containing compound bonding to one molecule of the component (B-1) may have a lower limit of 0.0001 mol, for example, 0.01 mol, particularly 0.1 mol, based on 1 mol of the total perfluoropolyether-containing compounds. The mixture of the perfluoropolyether-containing compounds may contain a perfluoropolyether-containing compound bonded to 2 molecules of the component (B-1), the amount of which has an upper limit of 1 mol, for example, 0.8 mol, particularly 0.5 mol, based on 1 mol of the total perfluoropolyether-containing compounds. The mixture of the perfluoropolyether-containing compound may not contain the perfluoropolyether-containing compound bonding to 2 molecules of the component (B-1).

The mixture of the perfluoropolyether-containing compounds may contain a perfluoropolyether-containing compound molecule not bonded to the component (B-3), a perfluoropolyether-containing compound molecule bonded to one molecule of the component (B-3), and/or
a perfluoropolyether-containing compound molecule bonded to two molecules of the component (B-3).
The amount of the perfluoropolyether-containing compound molecule bonded to one molecule of the component (B-3) has an upper limit of 1 mol, for example, 0.8 mol, particularly 0.5 mol, based on 1 mol of the total perfluoropolyether-containing compounds. The mixture of the perfluoropolyether-containing compounds may contain the perfluoropolyether-containing compound bonded to 2 molecules of the component (B-3), the amount of which has an upper limit of 0.8 mol, for example, 0.5 mol, particularly 0.3 mol, based on 1 mol of the total perfluoropolyether-containing compounds.

The affinity with the fluorine-free substance can be imparted to the perfluoropolyether by reacting (A) a triisocyanate (for example, a HMDI-isocyanurate modified trimer) which is a trimer of a diisocyanate having the high affinity with various fluorine-free substances (for example, alkyl diisocyanate) with (B-1) a perfluoropolyether having active hydrogen at end, (B-2) and addition-polymerizable monomer having active hydrogen, and optionally (B-3) a third compound having active hydrogen.

When the active hydrogen of the monomer (B-2)/the active hydrogen of the PFPE (B-1)/the isocyanate group of the triisocyanate (A) are reacted in a ratio of 2/1/3(equivalent) in the same reactor, single substance of the compound (2) can be obtained. The compound (2) has the high affinity with a diluent, particularly a fluorine-free diluent.
When the reactant charge ratio is adjusted so that all NCO groups of the triisocyanate are modified in the ratio of active hydrogen of monomer (B-2)/active hydrogen of PFPE (B-1) ≧ 2 (equivalent ratio), a mixture of a plurality of the components containing the fluorine-free compound (1) and the PFPE-containing fluorocompound (2) is produced in the same reactor. This mixture is addition polymerizable composition having the increased homogeneity. Because the fluorine-free compound (1) has no fluorine atom and a structure analogous to the compound (2), the fluorine-free compound (1) has a role of solubilizing the fluorocompound (2) in a fluorine-free coating agent and a role of a polyfunctional acrylate crosslinking agent.

The soil-resistant composition has the following features:
(a) it is possible to provide a PFPE-containing soil-resistant agent having the compatibility significantly increased by the addition of a urethane acrylate structure having an isocyanurate skeleton,
(b) it possible to easily prepare a mixture of the compound (1) and the compound (2) by controlling a composition ratio of active hydrogen-containing compounds reacted with a triisocyanate in one pot, and
(c) it is possible to significantly improve the solubility into a fluorine-free compound by making a mixture.

While a composition containing the component (2) and free of the component (1) has the solubility to some degree, a mixture of the component (2) and the component (1) further improves the solubility.
Thus, for example, the single product of the component (2) can be dispersed in several types of monofunctional dilutable acrylate and can be homogeneously dispersed in a polyfunctional acrylate having high crosslinkability, which is used in a hard coating agent, in the copresence of a dilutable monomer, and then a homogeneous film can be made. The mixture of the compound (1) and the compound (2) obtained by adjusting the charge ratio and using one pot is compatible with a fluorine-free polyfunctional acrylate and can be incorporated into a mixture solution consisting of highly crosslinkable polyfunctional acrylate (without a dilutable acrylate).

Because the soil-resistant composition has the carbon-carbon double bond, it is copolymerized with a coating monomer by means of heat- or photo-polymerization and firmly fixed into a surface coating film.
Because some degree of hardness is required for the use as a surface protection film, it is preferable to use, as the main component, a polyfunctional monomer having the high crosslinking density in order to increase the hardness. For this purpose, the perfluoropolyether-containing compound having carbon-carbon double bond is preferably compatible with the polyfunctional monomer.

The above modification enables the perfluoropolyether (PFPE) to mix with an addition-polymerizable monomer composition such as an acrylic monomer constituting, for example, a (hard) coating agent. The coating agent having the surface property of PFPE, which can be used on various substrates such as resin, metal and glass, can be obtained. While the coating agent of the present invention can be used for forming a hard film, it can form a soft film depending on a monomer copolymerized.

Because of use of the reaction of the NCO group and the hydroxyl group in the present invention, the PFPE having the hydroxyl group and the acrylate having the hydroxyl group sequentially or a mixture thereof are reacted with HMDI-isocyanurate modified product (triisocyanate) so that the synthesis can be done without the necessity of removing the products form the reactor. That is, the one pot synthesis can be done. The composition ratio of the component (1) to the component (2) can be varied and the solubility into a hydrocarbon material and the content of the PFPE can be controlled by adjusting the ratio of HEA (hydroxyl group-containing acrylate)/hydroxyl group-containing PFPE with respect to the HEA and the hydroxyl group-containing PFPE which are reacted in the total amount of 3 mol based on 1 mol of the triisocyanate. Additionally, the objective compound can be produced in one pot. For example, when HEA/PFPE is 2/1 (molar ratio), the compound (2) in the above formulas can be obtained in 100%, and when HEA/PFPE is 8/1 (molar ratio), the compound (1)/the compound (2) in 2/1(molar ratio) can be obtained.

An advantage of the one pot synthesis is good productivity. The polymerizable compound can be handled till the final product with small heat history and without the undesirable polymerization on half way.
The present invention produces the composition having more intimate mixing than a composition prepared by the post-mixing (that is, the compound (1) and the compound (2) are prepared separately and then mixed). Thus, the composition can be more compatible with another coating monomer.
The ingredients in the composition can be arbitrarily changed according to the solubility and the target properties of the polymer film and can be compatibilized with various objective coating agents. For example, by adjusting the molecular weight of the PFPE compound to e.g., 500 to 10000, the compatibility can be increased. Even if a coating agent having poor solubility is used, the soil-resistant composition can be compatibilized with the coating agent. In order to improve the compatibility, the equivalent ratio (that is, the equivalent ratio relating to active hydrogen) of the component (B-2)/the component (B-1) (for example, HEA/PFPE) is increased to preferably at least 2/1, for example, from 2/1 to 20,000/1.

The soil-resistant agent is a compound wherein at least one NCO group among three NCO groups present in one molecule is bonded to the carbon-carbon double bond. Accordingly, the amount of the component (B-2) (for example, an active hydrogen-containing acrylate) reacted with one molecule of the triisocyanate (A) is at least one mol. The component (B-1) (for example, a PFPE-containing alcohol) and the third component (for example, the component (B-3)) are bonded to the remaining NCO group.
The soil-resistant agent may be a compound wherein the PFPE-containing alcohol (B-1) has reacted with at least one NCO group among three NCO groups in 1 mol of the triisocyanate, the component (B-2) (for example, a hydroxyl group-containing acrylate) has reacted in the amount of at least 1 mol and the remaining reactant is a third functional component (for example, a long chain alkyl-containing alcohol for the purpose of imparting the solubility and a silicone compound for the purpose of increasing the hardness).

The perfluoropolyether-containing compound having carbon-carbon double bond in the soil-resistant composition (that is, the PFPE-containing monomer) may have one or two hydroxyl groups. When two hydroxyl groups are possessed, the perfluoropolyether-containing compound has one hydroxyl group at each end of the perfluoropolyether compound molecule.

When the component (B-1) is a monool, the preparation of the PFPE monomer can be conducted by adding the raw materials containing the component (B-1), (B-2) and (B-3) in sequence or in the form of a mixture in the same reactor to react with the triisocyanate. When the component (B-1) is a diol, the preparation of the PFPE monomer is preferably conducted by a sequential reaction wherein 2 mol of a mixture of the monomer (B-2) having active hydrogen and carbon-carbon double bond and the component (B-3) having active hydrogen (that is, the third component) is firstly reacted with 1 mol of triisocyanate, and then 1 mol of the remaining NCO moiety is reacted with 0.5 mol of PFPE both-terminated diol (that is, the component (B-1) of diol type).

The compound having carbon-carbon double bond and perfluoropolyether group can be purified by precipitating the soil-resistant composition in a nonpolar solvent (for example, an aliphatic or aromatic hydrocarbon having 4-20 carbon atoms) to separate from a high boiling point reaction solvent, then adding acetone and a polymerization inhibitor, and removing a solution of the compound having carbon-carbon double bond and perfluoropolyether group from the reactor.

The soil-resistant composition, particularly the composition comprising the perfluoropolyether-containing compound having carbon-carbon double bond (that is, the PFPE monomer) can be compatibilized with a diluent (particularly, various solvents and various polymerizable coating monomers (that is, monomers having carbon-carbon double bond)) in a high concentration so that the film formation is easy and the homopolymerization of the PFPE monomer or the copolymerization of the PFPE monomer and the polymerizable coating monomer can be conducted after the film formation. The diluent is generally a fluorine-free compound and may be a fluorocompound.
The solvent and/or polymerizable coating monomer (the monomer having carbon-carbon double bond) is optionally added to the soil-resistant composition before the soil-resistant composition is coated on the substrate.

The solvent is a fluorine-free solvent (particularly, a hydrocarbon-based solvent) or a fluorosolvent. Examples of the fluorine-free solvent include ketones (for example, methyl ethyl ketone and acetone); alcohols (for example, a monovalent alcohol such as ethanol and propanol, and polyhydric alcohol (particularly, di- to tetra-hydric alcohol) such as ethylene glycol, diethylene glycol and propylene glycol); esters (for example, ethyl acetate); and ethers (for example, diethylene glycol monomethyl ether, diethylene glycol monomethyl ether acetate). Examples of the fluorosolvent include fluoroalcohols, fluoroethers, and ditrifluoromethyl benzene.

Examples of the fluoroalcohol include:

H(CF₂)ᵥ(CH₂)_{w}-OH,

F(CF₂)ᵥ(CH₂)_{w}-OH,

F(CF₂)ᵥCH=CHCH₂OH,

and

F(CF₂)ᵥCH₂CH(I)CH₂OH,

wherein v is an integer of 1-8 and w is an integer of 1-8.

The fluoroether may be a compound of the formula: R²¹-O-R²² wherein R²¹ and R²² are a linear of branched alkyl group having 1 to 10 carbon atoms which may contain or may not contain fluorine, and at least one of R²¹ and R²² contains a fluorine atom. Examples of the fluoroether include hydrofluoroalkyl ethers. The commercial products of the fluoroether include HFE-7100 and HFE-7200 manufactured by 3M Company. Ditrifluoromethyl benzene includes a single product or mixture of o-, m- and p-isomers.

In the synthesis of the soil-resistant composition, the composition which is compatible with various medium can be obtained by controlling the composition through reducing a content of the PFPE group having a hydroxyl group, or by reacting the active hydrogen-containing compound (B-3) according to the purpose. Therefore, the solvent is not limited to those exemplified above.
The weight ratio of the soil-resistant composition (especially, the perfluoropolyether-containing compound having a carbon-carbon double bond (that is, the PFPE monomer)) to the diluent may be 1:100,000 to 1:1, for example, 1:10,000 to 1:1, especially 1:100 to 1:1.
The soil-resistant composition may be applied to the surface of the metal mold or the substrate before or after being polymerized. The thickness of the soil-resistant layer may be 0.001-1µm, especially 0.05-0.1µm.

The coating layer (c) is formed from a polymerizable coating monomer or resin.

The polymerizable coating monomer is a compound having at least one carbon-carbon double bond and is selected from acrylate monomers such as (meth)acrylate ester; vinyl alcohols, vinyl acetate and vinyl ethers (for example, C₁₋₁₂ alkyl vinyl ether). The polymerizable coating monomer may be a (meth)acrylate ester, for example, (meth)acrylate esters having at least one hydroxyl group. The (meth)acrylate ester may be, for example, a compound prepared by esterification between a di- to penta-hydric alcohol (for example, diols such as C₂₋C₁₀ alkylenediol) and (meth)acrylic acid.
The polymerizable coating monomer is a fluorocompound or a fluorine-free compound. The polymerizable coating monomer is a silicon-containing compound or a silicon-free compound.
The polymerizable coating monomer may be a monofunctional monomer having one carbon-carbon double bond, or a polyfunctional monomer having at least 2 carbon-carbon double bonds.

The polymerizable coating monomer may be the monofunctional monomer. Examples of the monofunctional monomer include acrylamide, 7-amino-3,7-dimethyloctyl (meth)acrylate, isobutoxymethyl(meth)acrylamide, isobornyloxyethyl (meth)acrylate, isobornyl (meth)acrylate, 2-ethylhexyl (meth)acrylate, ethyl diethyleneglycol (meth)acrylate, t-octyl(meth)acrylamide, (meth)acryloylmorpholine, diacetone(meth)acrylamide, N,N-dimethylaminoethyl (meth)acrylate, N,N-diethyl aminoethyl (meth)acrylate, lauryl (meth)acrylate, dicyclopentdiene (meth)acrylate, dicyclopentenyloxyethyl (meth)acrylate, dicyclopentenyl (meth)acrylate, N,N-dimethyl(meth)acrylamide, tetrachlorophenyl (meth)acrylate, 2-tetrachlorophenoxyethyl (meth)acrylate, tetrahydrofurfuryl (meth)acrylate, tetrabromophenyl (meth)acrylate, 2-tetrabromophenoxyethyl (meth)acrylate, 2-trichlorophenoxyethyl (meth)acrylate, tribromophenyl (meth)acrylate, 2-tribromophenoxyethyl (meth)acrylate, 2-hydroxyethyl (meth)acrylate, 2-hydroxypropyl (meth)acrylate, 2-hydroxybutyl (meth)acrylate, phenoxyethyl (meth)acrylate, butoxyethyl (meth)acrylate, pentachlorophenyl (meth)acrylate, pentabromophenyl (meth)acrylate, polyethyleneglycol mono(meth)acrylate, polypropyleneglycol mono(meth)acrylate, bornyl (meth)acrylate, methyltriethylenediglycol (meth)acrylate, 1,4-butanediol mono(meth)acrylate, 2-ethyl hexylpolyoxy (meth)acrylate, benzyl (meth)acrylate, phenyloxyethyl (meth)acrylate, phenyloxyethyl oxyethyl (meth)acrylate, tricyclodecane mono(meth)acrylate, acryloylmorpholine, N-vinylcaprolactam, 2-hydroxy-3-phenyloxypropyl (meth)acrylate, 3-hydroxy-3-phenoxypropyl acrylate, 2-methacryloyloxyethyl succinate, 2-methacryloyloxyethyl hexahydrophthalate, ethoxydiethyleneglycol acrylate, methoxytriethyleneglycol acrylate, 2-methacryloyloxyethyl-2-hydroxyethyl phthalate, and (meth)acryloyl group-containing monomers such as compounds of the following formulas (i)-(iii): 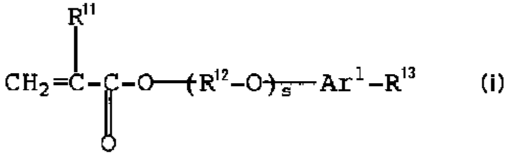 wherein R¹¹ is H or methyl, R¹² is C₂₋₆-alkylene, preferably C₂₋₄-alkylene, R¹³ is H or an C₁₋₁₂-alkyl, preferably C₁₋₉-alkyl, Ar¹ is a divalent aromatic group such as phenylene, biphenylene and naphtylene, and s is a number of 0-12, preferably 1-8, 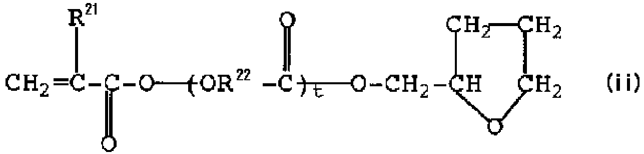 wherein R²¹ is H or methyl, R²² is C₂₋₈-alkylene, preferably C₂₋₅-alkylene, t is a number of 1-8, preferably 1-4, 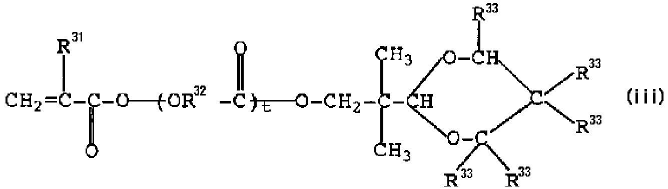 wherein R³¹ is H or methyl, R³² is C₂₋₈-alkylene, preferably C₂₋₅-alkylene, R³³ is H or methyl, t is a number of 1-8, preferably 1-4, provided that each R³³ may be the same or different.

Examples of a monofunctional monomer containing fluorine atom include trifluoroethyl methacrylate, 2,2,3,4,4,4-hexafluorobutyl methacrylate, perfluoro-octylbutyl methacrylate and 2,2,3,3-tetrafluoropropyl methacrylate.

Examples of a monofunctional monomer containing silicon atom include a terminal-reactive polydimethylsiloxane having the formula (iv): 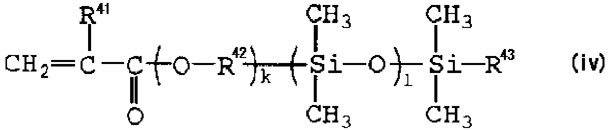 wherein R⁴¹ is H or methyl, R⁴² is branched or linear C₁₋₁₀-alkylene, R⁴³ is branched or linear C₁₋₁₀-alkyl, k is 1-10, and I is 1-200.

The polymerizable coating monomer may be the polyfunctional monomer. Examples of the polyfunctional monomer include (meth)acryloyl group-containing monomers such as ethyleneglycol di(meth)acrylate, dicyclopentenyl di(meth)acrylate, triethyleneglycol diacrylate, tetraethyleneglycol di(meth)acrylate, polyethyleneglycol diacrylate, tricyclodecanediyldimethylene di(meth)acrylate, trimethylolpropane di(meth)acrylate, trimethylolpropane tri(meth)acrylate, EO-modified trimethylolpropane tri(meth)acrylate, PO-modified trimethylolpropane tri(meth)acrylate, tripropyleneglycol di(meth)acrylate, neopentylglycol di(meth)acrylate, 1,4-butanediol di(meth)acrylate, 1,6-hexanediol di(meth)acrylate, pentaerythritol tri(meth)acrylate, polyester di(meth)acrylate, polyethyleneglycol di(meth)acrylate, tris[(meth)acryloxyethyl] isocyanurate, tricyclodecanedimethylol di(meth)acrylate, trimethylolpropane tripropoxylated tri(meth)acrylate, glyceroltripropoxylated tri(meth)acrylate, hydroxypivalic acid neopentyl glycol di(meth)acrylate, bisphenol A polyethoxylated di(meth)acrylate, pentaerythritol tri- or tetra(meth)acrylate, dipentaerythritol penta- and hexa(meth)acrylate, ditrimethylolpropane tetra(meth)acrylate, polyester (meth)acrylate, 1,10-decanediol dimethacrylate, hydroxypivalic acid neopentylglycol diacrylate, ethyleneoxide-modified trimethylolpropane triacrylate, dimethyloltricyclodecane diacrylate, and a compound of the following formula (v): 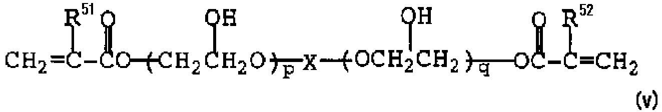 wherein R⁵¹ and R⁵² are H or methyl, X is a divalent group such as C₂₋₆-alkylene, preferably C₂₋₄-alkylene, phenylene, biphenylene and naphtylene, p and q is independently a number of 1-10, preferably 1-5.

A specific example of the polyfunctional monomer free of fluorine atom and silicon atom is an acrylate ester of bisphenol A diglycidyl ether polymer of the formula (vi): 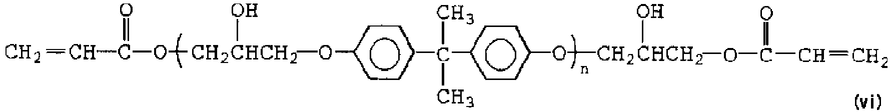 wherein n is a number of 1-3.

Specific examples of the polyfunctional monomer having silicon atom include a dimethylsiloxane compound of the formula (vii): 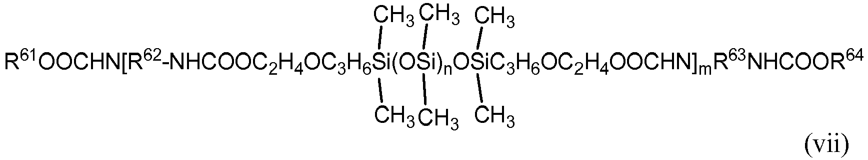 wherein m is a number of 1-10, n is a number of 6-36, R⁶¹ and R⁶⁴ are a group having at least two acrylate groups (CH₂=CHCOO-), and R⁶² and R⁶³ are a divalent organic group. In the formula, R⁶¹ and R⁶⁴ may be (CH₂=CHCOOCH₂)₃CCH₂- or 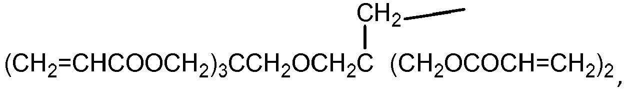 R⁶² and R⁶³ may be

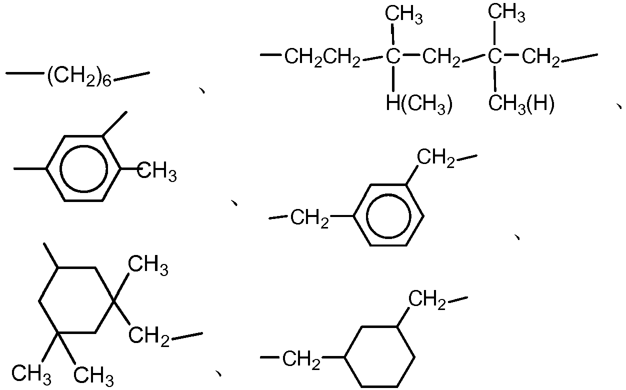

The polymerizable coating monomer may be an epoxy (meth)acrylate or urethane (meth)acrylate. The epoxy (meth)acrylate or urethane (meth)acrylate has one or at least 2 acryl groups.
The epoxy (meth)acrylate is a reaction product between an epoxy resin and a (meth)acrylate. The epoxy resin used herein includes, for example, a bisphenol A type epoxy resin, a bisphenol F type epoxy resin, a biphenyldiglycidyl ether, a phenol novolac type epoxy resin, a cresol novolac type epoxy resin, a trisphenol methane type epoxy resin, an epoxidized product of aliphatic or cycloaliphatic olefin, epoxidized polybutadiene, and epoxidized rosin.

The urethane (meth)acrylate may be, for example, a reaction product of a polyol compound (a), an organic polyisocyanate (b) and a hydroxyl group-containing (meth)acrylate (c).
Examples of the polyol compound (a) generating the urethane (meth)acrylate include diols such as ethylene glycol, propylene glycol, neopentylglycol, 1,6-hexane diol, 3-methyl-1,5-pentane diol, 1,9-nonanediol, 1,4-butanediol, diethyleneglycol, tripropyleneglycol, 1,4-dimethylolbenzene, 1,4-dimethylolcyclohexane, bisphenol A polyethoxydiol, polypropyleneglycol and polytetramethyleneglycol; polyester polyols which are reaction products between these diols and dihydric acids such as succinic acid, maleic acid, itaconic acid, phthalic acid, isophthalic acid, terephthalic acid, adipic acid and dimeric acid or acid anhydrides thereof; polycaprolactone polyols which are reaction products of the above diols, the above dihydric acids or acid anhydrides thereof, and ε-caprolactone; and polycarbonate polyols.

Examples of the organic polyisocyanate (b) generating the urethane (meth)acrylate include, for example, trylene diisocyanate, isophorone diisocyanate, xylylene diisocyanate, diphenylmethane-4,4'-diisocyanate, dicyclopentanyl diisocyanate, hexamethylene diisocyanate, 2,4,4'-trimethylhexamethylene diisocyanate, and 2,2',4-trimethylhexamethylene diisocyanate.

Examples of the hydroxyl group-containing (meth)acrylate (c) generating the urethane (meth)acrylate include, for example, a reaction product of ε-caprolactone and 2-hydroxyethyl (meth)acrylate, 2-hydroxypropyl (meth)acrylate, 1,4-butanediol mono(meth)acrylate or 2-hydroxyethyl (meth)acrylate; and 2-hydroxy-3-phenyloxypropyl (meth)acrylate, pentaerythritol tri(meth)acrylate and glycerol di(meth)acrylate.

A resin layer for the coating layer may be further laminated after forming the soil-resistant layer by coating and curing the soil-resistant composition on a substrate sheet (or a metal mold). Alternatively, curing may be carried out after the resin for the coating layer is further coated on the coated layer of the soil-resistant composition. The coating layer is preferably a transparent layer. This is because of keeping the transmittance of light in the optical product while keeping the hardness of the molded resin article surface. As the resin for the coating, a curable resin is used. As the curable resin, both an ionized radiation-curable resin and a thermal-curable resin are used. The thickness of the coating layer may be 1-100µm.

As the ionized radiation-curable resin, is used a composition which comprises proper mixtures of a prepolymer, oligomer and/or monomer having a polymerizable unsaturated bond or an epoxy group in the molecule.
Examples of said prepolymer and oligomer are as follows: unsaturated polyesters such as a condensation product between unsaturated dicarbxylic acid and polyalcohol, methacrylates such as polyester methacrylate, polyether methacrylate, polyol methacrylate and melamine methacrylate, and acrylates such as polyester acrylate, epoxy acrylate, urethane acrylate, polyether acrylate, polyol acrylate and melamine acrylate. Examples of said monomer are as follows: styrene-type monomers such as styrene and α-methylstyrene, acrylate esters such as methyl acrylate, 2-ethylhexyl acrylate, methoxyethyl acrylate, butoxyethyl acrylate, butyl acrylate, butoxybutyl acrylate and phenyl acrylate, methacrylate esters such as methyl methacrylate, ethyl methacrylate, propyl methacrylate, methoxyethyl methacrylate, ethoxymethyl methacrylate, phenyl methacrylate and lauryl methacrylate, esters of unsaturated acid with substituted aminoalcohol such as 2-(N,N-diethylamino)ethyl acrylate, 2-(N,N-dimethylamino)ethyl methacrylate, 2-(N,N-dibenzylamino)ethyl acrylate, (N,N-dimethylamino)methyl methacrylate and 2-(N,N-diethylamino)propyl acrylate, unsaturated carboxylic acid amides such as acrylamide and methacryl amide, compounds such as ethylene glycol diacrylate, propylene glycol diacrylate, neopentyl alcohol diacrylate, 1,6-hexandiol diacrylate, diethylene glycol diacrylate and triethylene glycol diacrylate, multi-functional compounds such as dipropylene glycol diacrylate, ethylene glycol acrylate, propylene glycol dimethacrylate and diethylene glycol dimethacrylate, and/or polythiol compounds having at least two thiol groups in the molecule such as trimethylolpropane trithioglycolate, trimethylolpropane trithiopropylate and pentaerythritol tetrathioglycolate.

The compounds described above are used optionally alone or in a mixture of at least two kinds. In order to provide the resin composition with an ordinal adequacy of coating, it is preferable to make the contents of said prepolymer or oligomer in 5 wt.-% or more and the contents of said monomer and/or polythiol in 95 wt.-% or less.

In selection of the monomer, when a flexibility of the cured product is required, it is preferable to form a structure having a comparatively low crosslinking density by fairly reducing the amount of the monomer or by using a mono-functional or di-functional acrylate monomer within a range wherein no interfere occurs in the coating properties. On the other hand, when heat resistance, hardness, solvent resistance, etc. of the cured material are required, it is preferable to form a structure having a high crosslinking density by fairly increasing the amount of the monomer or by using a tri- or more-functional monomer within a range wherein no interfere occurs in the coating properties. The coating properties and the properties of the cured material can be adjusted also by mixing mono- and di-functional monomers and tri- or more-functional monomers.
As the monofunctional acrylate monomer above mentioned, are exemplified 2-hydroxyethyl acrylate, 2-hydroxyhexyl acrylate and phenoxyethyl acrylate. As the difunctional acrylate monomer, exemplified are ethylene glycol diacrylate and 1,6-hexane diol diacrylate. As the tri- or more-functional acrylate monomer, are exemplified trimethylol propane triacrylate, pentaerythritol hexa-acrylate and dipentaerythritol hexaacrylate.

In order to adjust the properties of the cured material such as flexibility and surface hardness, the following resins which are not curable by ionized radiation can be mixed in 1-70 wt.-%, preferably, 5-50 wt.-% to at least one of said prepolymer, oligomer or monomer. As the resins which are not curable by ionized radiation, exemplified are the heat-curable resins such as a urethane polymer, a cellulose polymer, polyester, an acrylate polymer, a butyral polymer, polyvinyl chloride and polyvinyl acetate. Among them, the cellulose polymer, the urethane polymer and the butyral polymer are preferable especially from the view point of flexibility.

If the composition is cured by an UV irradiation, the resin composition which is curable by the ionized radiation can be mixed with a photopolymerization initiator (e.g. acetophenones, benzophenones, Michler's benzoyl benzoate, α-amyloxime ester, tetramethylthiuram monosulfide and thioxanthones) and/or a photosensitizer (e.g. n-butyl amine, triethyl amine and tri-n-butyl phosphine). The amount of the photopolymerization initiator may be 0.1-5 parts by weight based on 100 parts by weight of the curable resin composition.

The ionized radiation used herein means the radiation which has an energy quantum capable of polymerizing and curing a molecule, and UV rays and electron beams are commonly used as the ionized radiation. As a source of the UV rays, are utilized light sources such as an ultrahigh pressure mercury lamp, a high pressure mercury lamp, a low pressure mercury lamp, a carbon arc lamp, a black light lamp and a metal halide lamp. As an electron beam source, various electron beam accelerators such as a Cockcroft-Walton type, a Van de Graaff-type, an oscillating transformer type, an insulated core transformer type, a linear type, a Dynamitron type and a high frequency type can be applied and electrons having an energy of 100-1000keV, preferably, 100-300keV are irradiated.

As a heat curable resin, are exemplified a phenol resin, a urea resin, a diallyl phthalate resin, a melamine resin, a guanamine resin, an unsaturated polyester resin, a polyurethane resin, an epoxy resin, an amino alkyd resin, a melamine/urea polycondensation resin, a silicone resin and a polysiloxane resin. To the heat curable resin, optionally, a curing agent such as a cross-linking agent and a polymerization initiator, a polymerization promoter, a solvent, a viscosity adjusting agent and a body pigment are added.
As the curing agent, generally used are isocyanate for the unsaturated polyester resin and the polyurethane resin, amine for the epoxy resin, and peroxides such as methyl ethyl peroxide and a radical initiator such as azobisisobutyronitrile for the unsaturated polyester resin.
As the isocyanate, di- or more-valent aliphatic or aromatic isocyanate can be used. From the viewpoints of anti-heat discoloration and weather-resistant properties, an aliphatic isocyanate is preferable. Specifically, the following isocyanates are exemplified: tolylene diisocyanate, xylene diisocyanate, 4,4-diphenylmethane diisocyanate, hexamethylene diisocyanate and lysine diisocyanate.
In order to accelerate the curing reaction, heating optionally after coating may be carried out. For example, the heating is generally carried out for around 1-100 hours at 40-80°C in case of the isocyanate-curable or urethane-curable unsaturated polyester resin, and the heating is generally carried out for 1-300 minutes at 60-150°C in case of the popysiloxane resin.
The thickness of the coating layer may be 1-100 µm.

In the soil-resistant transfer sheet of the present invention, optionally, an adhesive layer (d) is further laminated on the transparent resin coating layer. The adhesive layer has a function for improving the adhesiveness between the soil-resistant transfer sheet and the resin molded article. As a resin used for the adhesive layer, no limitation is present but proper resins ordinary used for the transfer sheet can be selected. For example, appropriate resins can be selected for adopting for the substrate, from the resins comprising, as a main component, one or a mixture of at least two consisting of organic solvent type resins and emulsion type resins such as a polyester-isocyanate resin, a urethane resin, an acrylic resin, a vinyl acetate resin, a vinyl chloride resin, a styrenebutadiene resin, a vinyl chloride-vinyl acetate resin, an ethylene-vinyl acetate resin, a polyester resin, a chlorinated rubber and a chlorinated polypropylene resin.
The adhesive layer is formed by drying after applying a coating liquid obtained by diluting said resins with organic solvents or water on the coating layer by a dipping method, a spin-coating method, a spraying method, etc. The thickness of the adhesive layer is, without any limitation, generally in the range of 0.3-20µm depending on the surface condition of the substrate, etc.
In the soil-resistant transfer sheet of the present invention, a functional layer may be optionally laminated in addition to the layers described above. Examples of the functional layer include a decoration layer and an antistatic layer.

The present invention includes a process for producing the soil-resistant transfer sheet comprising the steps of:
forming a soil-resistant layer (b) by applying a soil-resistant composition on the substrate sheet (a),
forming a coating layer (c) by applying a polymerizable coating composition to the soil-resistant layer (b), and
curing the soil-resistant composition and the polymerizable coating composition.

The present invention includes a process for producing the soil-resistant transfer sheet comprising the steps of:
forming a soil-resistant layer (b) by applying and curing the soil-resistant composition on the substrate sheet (a), and forming the coating layer (c) by applying and curing a polymerizable coating composition to the soil-resistant layer (b). The soil-resistant composition is preferably applied to the substrate sheet in the thickness of 0.001-1µm, and the polymerizable coating composition is preferably applied in the thickness of 1-100µm.

The present invention includes a process for producing the soil-resistant transfer sheet comprising the step of forming an adhesive layer (d) by applying an adhesive composition to the coating layer (c) before or after curing of the coating layer (c).

In the present invention, the soil-resistant composition which is used for the process for the production of said soil-resistant transfer sheet is as described above, and the composition containing the perfluoropolyether urethane acrylate is especially preferable.

The transfer sheet of the present invention can be transferred to the article by various methods, for example, an in-mold labeling, a lamination process and a coating process. The present invention includes a process for producing the soil-resistant molded resin article by using said soil-resistant transfer sheet. Examples of the molding process are an in-mold labeling, an insert molding and a roll coating. The in-mold labeling is especially preferable as the embodiment of the present invention.

The present invention includes a process for producing a soil-resistant molded resin article comprising the steps of:
applying and curing a soil-resistant composition on an internal surface of a metal mold,
applying and curing a polymerizable coating composition and
applying an adhesive agent in these sequences, then
conducting an in-mold labeling by filling a resin composition in the metal mold.

The present invention includes the soil-resistant molded resin article obtained by said production process. Examples of the soil-resistant molded resin article include various articles which require the soil-resistant properties on the surface of the molded resin article such as optical articles, automobile parts and office articles. Examples of the article include a front protection panel of a display of PDP, LCD and the like, an antireflection panel, a polarized light plate, an antiglare plate, an instrument such as a cellular phone and a PDA, a touch panel sheet, a optical disc such as a DVD disc, a CD-R and an MO, an eyeglass lens and an optical fiber.

### Examples

The present invention is described specifically by examples below. However, the present invention is not limited by these examples. The terms "%" and "parts" are, if not specified, "% by weight (or wt.-%)" and "parts by weight (or pbw)", respectively.

### Synthesis Example 1

### [Preparation of a 50 wt.-% solution of a perfluoropolyether urethane acrylate composition (1) in HCFC-225]

In a 1 L three-necked flask equipped with a dropping funnel, a condenser, a thermometer and a stirrer, SUMIDUR N3300 (a cyclic trimer of hexamethylene diisocyanate, manufactured by Sumitomo Bayer Urethane Co., Ltd., an NCO group content: 21.9%) (57 g) was dissolved in HCFC-225 (165 g), dibutyltin dilaurate (a first grade agent manufactured by Wako Pure Chemical Industries, Ltd.) (0.4 g) was added, a solution of CF₃CF₂O-(CF₂CF₂CF₂O)_{10.9}-CF₂CF₂CH₂OH (purity: 86.9%, a PFPE monoalcohol manufactured by Daikin Industries, Ltd.) (244 g) dissolved in HCFC-225 (160 g) was added dropwise over 4.5 hours in air at room temperature with stirring, and the mixture was stirred for 6 hours. The mixture was warmed to 40 to 45°C, hydroxyethyl acrylate (24.4 g) was added dropwise over 10 minutes and the mixture was stirred for 3 hours. The complete disappearance of an NCO absorption was confirmed by IR (¹⁹F-NMR of the product also confirmed the disappearance of -CF₂-CH₂OH.). A 50 wt% solution of perfluoropolyether urethane acrylate composition (1) in HCFC-225 was obtained.

### [Isolation of the perfluoropolyether urethane acrylate composition (1)]

To a three necked 1L round bottomed-flask provided with a thermometer, an agitator and a vacuum distillation device was added 400 g of 50 wt.-% HCFC solution of perfluoropolyether urethane acrylate composition (1) obtained in Synthesis Example 1, then followed by addition of 200 g of hexane at room temperature, then followed by still-standing at room temperature for 12 hours, thus resulting in a precipitation formation of the composition (1). After the upper layer was separated, 0.5 of p-tert-butyl catechol and 500 g of acetone were added under stirring for dissolving the composition (1). The solution obtained was heated at 30-40°C for distilling off acetone in reduced pressure, and the perfluoropolyether urethane acrylate composition (1) was obtained in the amount of 187 g.

### Synthesis Example 2

### [Preparation of a 50 wt.-% solution of a perfluoropolyether urethane acrylate composition (2) in HCFC-225]

In a 2 L three-necked flask equipped with a dropping funnel, a condenser, a thermometer and a stirrer, SUMIDUR N3300 (a cyclic trimer of hexamethylene diisocyanate, manufactured by Sumitomo Bayer Urethane Co., Ltd., an NCO group content: 21.9 %) (144 g) was dissolved in HCFC-225 (200 g), dibutyltin dilaurate (a first grade agent manufactured by Wako Pure Chemical Industries, Ltd.) (0.2 g) was added, a solution of CF₃CF₂O-(CF₂CF₂CF₂O)_{10.9}-CF₂CF₂CH₂OH (purity: 86.9%, a PFPE monoalcohol manufactured by Daikin Industries, Ltd.) (202 g) dissolved in HCFC-225 (300g) was added dropwise over 4.5 hours in air at room temperature with stirring, and the mixture was stirred for 6 hours. The mixture was warmed to 30-40°C, hydroxyethyl acrylate (96 g) was added dropwise over 30 minutes and the mixture was stirred for 6 hours. The complete disappearance of an NCO absorption was confirmed by IR (¹⁹F-NMR of the product also confirmed the disappearance of -CF₂-CH₂OH.). A 50 wt.-% solution of perfluoropolyether urethane acrylate composition (2) in HCFC-225 was obtained.

### [Isolation of the perfluoropolyether urethane acrylate composition (2)]

In the same procedure as in the isolation of the perfluoropolyether urethane acrylate composition (1) in Synthesis Example 1, 222 g of the perfluoropolyether urethane acrylate composition (2) was obtained from 500 g of the HCFC225 solution containing the composition (2) in 50 wt.-%.

### Example 1

### [Film formation of a 1st layer (a film providing soil-resistant mold release properties) according to a dipping method]

Dipping solutions for the 1st layer were prepared by dissolving each of the perfluoropolyether urethane acrylate compositions (1) and (2) into 2,2,3,3-tetrafluoro-1-propanol resulting in 0.1-0.5 wt.-% solutions, then followed by adding 3 parts of Irgacure 907 (manufactured by Ciba Specialty Chemicals Inc.) based on 100 parts of a solid in the solution (each of the perfluoropolyether urethane acrylate compositions (1) and (2)). A PET plate of 0.3 x 5 x 5 cm in size was dipped for few seconds in the dipping solution for the 1st layer, then followed by pulling up the plate rapidly and evaporating 2,2,3,3-tetrafluoro-1-propanol, resulting in the formation of the coating film, and then followed by curing at 60°C for 1-2 hours in the dark.

### [Application of a 2nd layer]

A UV-curable hard coating agent: BEAMSET 575CB (manufactured by ARAKAWA CHEMICALS INDUSTRIES LTD.) was applied to a PET plate having a size of 5 x 5 cm by using a spin-coater (5500 rpm), resulting in a formation of a thin film, then followed by UV-irradiation and curing using a mini-conveyer type UV-irradiation apparatus: ASE-20 (2 KW). (1 path energy: 180 mJ/cm² at 10 m/minutes)

### [Preparation of hard-coat film on which the perfluoropolyether urethane acrylate composition is transferred]

A hard-coat film, on which the perfluoropolyether urethane acrylate composition was transferred, was obtained by exfoliating (or peeing) the hard-coat film by inserting a blade edge of a cutter knife into an interface between the PET plate and the cured film of the hard coat agent (see Fig. 1).

### Example 2

The same procedure as Example 1 was carried out except that 3 parts of Irgacure 907 (manufactured by Ciba Specialty Chemicals Inc.) based on 100 parts of the solid component (each of perfluoropolyether urethane acrylate compositions (1) and (2)) in the solution of the 1st layer was not added. A hard coat film was obtained on which the perfluoropolyether urethane acrylate composition was transferred.

### Example 3

The same procedure as Example 1 was carried out except that a perfluoroacrylate (C8Rf acrylate: CH₂=C(-H)-C(=O)-O-(CH₂)₂-C₈F₁₇) was used in place of the perfluoropolyether urethane acrylate composition in the 1st layer in Example 1. A hard coat film was obtained on which perfluoroacrylate (C8Rf acrylate) was transferred.

### Example 4

The same procedure as Example 1 was carried out except that a perfluoroacrylate (C6Rf acrylate: CH₂=C(-H)-C(=O)-O-(CH₂)₂-C₆F₁₃) was used in place of the perfluoropolyether urethane acrylate composition in the 1st layer in Example 1. A hard coat film was obtained on which perfluoroacrylate (C6Rf acrylate) was transferred.

### Comparative Example 1

A hard coat film prepared by applying and curing BEAMSET 575CB (manufactured by ARAKAWA CHEMICALS INDUSTRIES LTD.) directly to the PET plate without applying the perfluoropolyether urethane acrylate composition to the 1st layer did not afford a sample for evaluation of the contact angle on the interface, since the hard coat film could not be exfoliated normally or could be exfoliated only as small fragments by inserting a blade edge of a cutter knife into the interface between the PET plate and the cured film. Also, for reference, an evaluation of the surface of the cured film was carried out. The static contact angle of water was 66° and the static contact angle of hexadecane was 9°.

The results of the evaluation of the static contact angles on the transferred-surface obtained and the PET (a substrate sheet) surface after de-molding (or mold-releasing) are shown in Tables 1 and 2 (wherein 3 parts of the initiator were added to the soil-resistant layer comprising the perfluoropolyether urethane acrylate composition) and Tables 3 and 4 (wherein the initiator was not added).
These tables show that, because of the presence of the soil-resistant layer (the perfluoropolyether urethane acrylate composition), both the water contact angle and the hexadecane contact angle increased in comparison to those in the absence of the soil-resistant layer. It was demonstrated that both water repellency and oil-repellency increase because of the presence of the soil-resistant layer.

**Table 1**

| Table 1. Contact angles wherein the initiator was added to the 1st layer in 3 parts based on 100 parts of the solid components in the dipping solution. (Initiator: Irgacure 907) | | |
|---|---|---|
| | Perfluoropolyether urethane acrylate composition (1) | |
| 1st Layer: Concentration of Dipping solution | 0.30% | |
| 2nd Layer: Static contact angles on the exfoliated surface of the BEAMSET 575CB film cured by UV | | |

| | Transferred surface on the hard coat side | PET surface exfoliated |
|---|---|---|
| Water contact angles (mean values) | 108 | 111 |
| Water contact angles after wiping by acetone | 106-108 | |
| Hexadecane contact angles (mean values) | 67 | 67.5 |

**Table 2**

| Table 2. Contact angles wherein the initiator was added to the 1st layer in 3 parts based on 100 parts of the solid components in the dipping solution. (Initiator: Irgacure 907) | | | | |
|---|---|---|---|---|
| 1 st Layer | Perfluoropolyether urethane acrylate composition (2) | | | |
| 1st Layer: Concentrations of Dipping solution | 0.30% | | 0.50% | |
| 2nd Layer: Static contact angles on the exfoliated surface of the BEAMSET 575CB film cured by UV irradiation | | | | |

| | Transferred surface on the hard coat side | PET surface exfoliated | Transferred surface on the hard coat side | PET surface exfoliated |
|---|---|---|---|---|
| Water contact angles (mean values) | 106 | 106 | 109 | 109 |
| Water contact angles after wiping by acetone | 106 | | 108 | |
| Hexadecane contact angles (mean values) | 67 | 64 | 65 | 68 |

**Table 3**

| Table 3. Contact angles wherein no initiator was added to the 1st layer. | | |
|---|---|---|
| I | Perfluoropolyether urethane acrylate composition (1) | |
| 1st Layer: Concentration of Dipping solution | 0.30% | |
| 2nd Layer: Static contact angles on the exfoliated surface of the BEAMSET 575CB film cured by UV irradiation | | |

| | Transferred surface on the hard coat side | PET surface exfoliated |
|---|---|---|
| Water contact angles (mean values) | 114 | 115 |
| Water contact angles after wiping by acetone | 110 | |
| Hexadecane contact angles (mean values) | 67 | 67 |

**Table 4**

| Table 4. Contact angles wherein no initiator was added to the 1st layer. | | | | |
|---|---|---|---|---|
| Layer | Perfluoropolyether urethane acrylate composition (2) | | | |
| 1st Layer: Concentrations of Dipping solution | 0.30% | | 0.50% | |
| 2nd Layer: Static contact angles on the exfoliated surface of the BEAMSET 575CB film cured by UV irradiation | | | | |

| | Transferred surface on the hard coat side | PET surface exfoliated | Transferred surface on the hard coat side | PET surface exfoliated |
|---|---|---|---|---|
| Water contact angles (mean values) | 103 | 81 | 103 | 92 |
| Water contact angles after wiping by acetone | 102 | | 102 | |
| Hexadecane contact angles (mean values) | 67 | 68 | 67 | 76 |

The evaluation results for the cases in which the 1st layers are the perfluoroacrylate (C8Rf acrylate) and perfluoroacrylate (C6Rf acrylate), respectively, are shown in Tables 5 and 6.

**Table 5**

| Table 5. Contact angles wherein the initiator was added to the 1st layer in 3 parts based on 100 parts of the solid components in the dipping solution. (Initiator: Irgacure 907) | | | | |
|---|---|---|---|---|
| 1st Layer | Perfluoroacrylate (C8Rf acrylate) | | | |
| 1st Layer: Concentrations of Dipping solution | 0.30% | | 0.50% | |
| 2nd Layer: Static contact angles on the exfoliated surface of the BEAMSET 575CB film cured by UV irradiation | | | | |

| | Transferred surface on the hard coat side | PET surface exfoliated | Transferred surface on the hard coat side | PET surface exfoliated |
|---|---|---|---|---|
| Water contact angles (mean values) | 118 | 118 | 117 | 117 |
| Water contact angles after wiping by acetone | 117 | | 118 | |
| Hexadecane contact angles (mean values) | 76 | 72 | 73 | 72 |

**Table 6**

| Table 6. Contact angles wherein the initiator was added to the 1st layer in 3 parts based on 100 parts of the solid components in the dipping solution. (Initiator: Irgacure 907) | | | | |
|---|---|---|---|---|
| 1 st Layer | Perfluoroacrylate (C6Rf acrylate) | | | |
| 1 st Layer: Concentrations of Dipping solution | 0.30% | | 0.50% | |
| 2nd Layer: Static contact angles on the exfoliated surface of the BEAMSET 575CB film cured by UV irradiation | | | | |

| | Transferred surface on the hard coat side | PET surface exfoliated | Transferred surface on the hard coat side | PET surface exfoliated |
|---|---|---|---|---|
| Water contact angles (mean values) | 110 | 108 | 108 | 107 |
| Water contact angles after wiping by acetone | 110 | | 105 | |
| Hexadecane contact angles (mean values) | 67 | 64 | 66 | 64 |

### Industrial Applicability

The present invention can be used in various articles which require soil-resistant properties on the surface of the resin molded articles such as optical articles, automobile parts and office articles. Examples of the article include a front protection panel of a display of PDP, LCD and the like, an antireflection panel, a polarized light plate, an antiglare plate, an instrument such as a cellular phone and a PDA, a touch panel sheet, a optical disc such as a DVD disc, a CD-R and an MO, a glass lens and an optical fiber.

## Claims

1. A sheet, which is a soil-resistant transfer sheet which comprises, in the following order,
(i) a substrate sheet (a),
(ii) a soil-resistant layer (b),
(iii) a coating layer (c), and
(iv) optionally an adhesive layer (d),
wherein
- a surface of the soil-resistant layer, which reveals after the substrate sheet (a) is removed, has a contact angle with water of 100° or larger and a contact angle with hexadecane of 40° or larger,
- the soil-resistant layer (b) is a layer obtained from a soil-resistant composition comprising a fluorine-containing compound having a polymerizable double bond,
- the coating layer (c) is formed from a polymerizable coating monomer or resin,
- the polymerizable coating monomer is selected from acrylate monomers, vinyl alcohols, vinyl acetate and vinyl ethers, and
- the coating resin is a curable resin.

2. The sheet of claim 1, wherein the soil-resistant composition is a perfluoropolyether urethane acrylate composition.

3. The soil-resistant transfer sheet according to claim 1 or 2, wherein the soil-resistant layer (b) is a layer obtained from a soil-resistant composition containing a carbon-carbon double bond, which comprises:
(A) a triisocyanate prepared by trimerizing a diisocyanate and
(B) a combination of at least two active hydrogen-containing compounds, wherein (B) comprises:
(B-1) a perfluoropolyether having at least one active hydrogen, and
(B-2) a monomer having an active hydrogen atom and a carbon-carbon double bond.

4. The sheet of any of claims 1-3, wherein a mold release layer (e) is present between the substrate sheet (a) and the soil-resistant layer (b).

5. The sheet of any of claims 1-4, wherein the polymerizable coating monomer is a silicon-containing compound, a silicon-free compound, a monofunctional monomer having one carbon-carbon double bond or a polyfunctional monomer having at least two carbon-carbon double bonds.

6. A process for producing the sheet of any of claims 1-5, wherein the process comprises the steps of:
- forming the soil-resistant layer (b) by applying the soil-resistant composition to the substrate sheet (a),
- forming the coating layer (c) by applying a polymerizable coating composition to the soil-resistant layer (b), and
- curing the soil-resistant composition and the polymerizable coating composition.

7. A process for producing the sheet of any of claims 1-5, comprises the steps of:
- forming the soil-resistant layer (b) by applying and curing the soil-resistant composition on the substrate sheet (a), and
- forming the coating layer (c) by applying and curing a polymerizable coating composition to the soil-resistant layer (b).

8. The process of claim 6 or 7, which comprises the step of forming an adhesive layer (d) by applying an adhesive composition to the coating layer (c) before or after curing the coating layer (c).

9. The process of any of claims 6-8, wherein the soil-resistant composition is a perfluoropolyether urethane acrylate composition.

10. The process of any of claims 6-9, wherein the soil-resistant layer is a layer comprising a soil-resistant composition having a carbon-carbon double bond, which comprises:
(A) a triisocyanate prepared by trimerizing a diisocyanate and
(B) a combination of at least two active hydrogen-containing compounds, wherein (B) comprises:
(B-1) a perfluoropolyether having at least one active hydrogen, and
(B-2) a monomer having an active hydrogen atom and a carbon-carbon double bond.

11. A process for producing a soil-resistant molded resin article by using the sheet of any of claims 1-5.

12. The process of claim 11, which is an in-mold labeling.

13. A molded resin article obtainable by the process of any of claim 11 or 12.

## Patentansprüche

1. Folie, die eine schmutzabweisende Transferfolie ist und in der folgenden Reihenfolge Folgendes umfasst:
(i) eine Trägerfolie (a),
(ii) eine schmutzabweisende Schicht (b),
(iii) eine Beschichtungsschicht (c), und
(iv) gegebenenfalls eine Adhäsivschicht (d),
worin
- eine Oberfläche der schmutzabweisenden Transferfolie, die nach Entfernen der Trägerfolie (a) freigelegt wird, einen Wasserkontaktwinkel von 100° oder größer und einen Kontaktwinkel mit Hexadekan von 40° oder größer hat,
- die schmutzabweisende Schicht (b) eine Schicht ist, die aus einer schmutzabweisenden Zusammensetzung, die eine fluorhaltige Verbindung mit einer polymerisierbaren Doppelbindung umfasst, erhalten wird.
- die Beschichtungsschicht (c) aus einem polymerisierbaren Beschichtungsmonomer oder -harz gebildet ist,
- das polymerisierbare Beschichtungsmonomer ausgewählt ist aus Acrylatmonomeren, Vinylalkoholen, Vinylacetat und Vinylethern, und
- das Beschichtungsharz ein härtbares Harz ist.

2. Folie gemäß Anspruch 1, worin die schmutzabweisende Zusammensetzung eine Perfluorpolyether-Urethan-Acrylat-Zusammensetzung ist.

3. Schmutzabweisende Transferfolie gemäß Anspruch 1 oder 2, worin die schmutzabweisende Schicht (b) eine Schicht ist, die aus einer schmutzabweisenden Zusammensetzung mit einer Kohlenstoff-Kohlenstoff-Doppelbindung erhalten wird, die Folgendes umfasst:
(A) ein durch Trimerisierung von Diisocyanat hergestelltes Triisocyanat und
(B) eine Kombination von mindestens zwei Verbindungen, die aktiven Wasserstoff enthalten, worin (B) Folgendes umfasst:
(B-1) einen Perfluorpolyether mit mindestens einem aktiven Wasserstoff, und
(B-2) ein Monomer mit einem aktiven Wasserstoffatom und einer Kohlenstoff-Kohlenstoff-Doppelbindung.

4. Folie gemäß mindestens einem der Ansprüche 1-3, worin zwischen der Trägerfolie (a) und der schmutzabweisenden Schicht (b) eine Formtrennschicht (e) vorhanden ist.

5. Folie gemäß mindestens einem der Ansprüche 1-4, worin das polymerisierbare Beschichtungsmonomer eine siliciumhaltige Verbindung, eine siliciumfreie Verbindung, ein monofunktionales Monomer mit einer Kohlenstoff-Kohlenstoff-Doppelbindung oder ein polyfunktionales Monomer mit mindestens zwei Kohlenstoff-Kohlenstoff-Doppelbindung ist.

6. Verfahren zur Herstellung einer Folie gemäß mindestens einem der Ansprüche 1-5, das die folgenden Schritte umfasst:
- Ausbilden der schmutzabweisenden Schicht (b) durch Auftragen der schmutzabweisenden Zusammensetzung auf der Trägerfolie (a),
- Ausbilden der Beschichtungsschicht (c) durch Auftragen einer polymerisierbaren Beschichtungszusammensetzung auf der schmutzabweisenden Schicht (b), und
- Härten der schmutzabweisenden Zusammensetzung und der polymerisierbaren Beschichtungszusammensetzung.

7. Verfahren zur Herstellung einer Folie gemäß mindestens einem der Ansprüche 1-5, das die folgenden Schritte umfasst:
- Ausbilden der schmutzabweisenden Schicht (b) durch Auftragen und Härten der schmutzabweisenden Zusammensetzung auf der Trägerfolie (a), und
- Ausbilden der Beschichtungsschicht (c) durch Auftragen und Härten einer polymerisierbaren Beschichtungszusammensetzung auf der schmutzabweisenden Schicht (b).

8. Verfahren gemäß Anspruch 6 oder 7, das den Schritt des Ausbildens einer Adhäsivschicht (d) durch Auftragen einer adhäsiven Zusammensetzung auf die Beschichtungsschicht (c) vor oder nach Härten der Beschichtungsschicht (c) umfasst.

9. Verfahren gemäß mindestens einem der Ansprüche 6-8, worin die schmutzabweisende Zusammensetzung eine Perfluorpolyether-Urethan-Acrylat-Zusammensetzung ist.

10. Verfahren gemäß mindestens einem der Ansprüche 6-9, worin die schmutzabweisende Schicht eine Schicht ist, die eine schmutzabweisende Zusammensetzung mit einer Kohlenstoff-Kohlenstoff-Doppelbindung umfasst, die Folgendes umfasst:
(A) ein durch Trimerisierung von Diisocyanat hergestelltes Triisocyanat und
(B) eine Kombination von mindestens zwei Verbindungen, die aktiven Wasserstoff enthalten, worin (B) umfasst:
(B-1) einen Perfluorpolyether mit mindestens einem aktiven Wasserstoff, und
(B-2) ein Monomer mit einem aktiven Wasserstoffatom und einer Kohlenstoff-Kohlenstoff-Doppelbindung.

11. Verfahren zur Herstellung eines schmutzabweisenden Harzformprodukts durch Verwendung der Folie gemäß mindestens einem der Ansprüche 1-5.

12. Verfahren gemäß Anspruch 11, das ein In-Mold-Labeling ist.

13. Harzformprodukt, das durch das Verfahren gemäß Anspruch 11 oder 12 erhalten wird.

## Revendications

1. Feuille, qui est une feuille de transfert anti-salissure qui comprend, dans l'ordre suivant :
(i) une feuille de substrat (a),
(ii) une couche anti-salissure (b),
(iii) une couche de revêtement (c), et
(iv) de manière facultative une couche adhésive (d),
dans laquelle
- une surface de la couche anti-salissure, qui se révèle après que la feuille de substrat (a) soit enlevée, a un angle de contact avec de l'eau de 100° ou plus et un angle de contact avec de l'hexadécane de 40° ou plus,
- la couche anti-salissure (b) est une couche obtenue à partir d'une composition anti-salissure comprenant un composé contenant du fluor ayant une liaison double pouvant être polymérisée,
- la couche de revêtement (c) est formée à partir d'une résine ou d'un monomère de revêtement pouvant être polymérisé,
- le monomère de revêtement pouvant être polymérisé est sélectionné à partir de monomères d'acrylate, d'alcools de vinyle, d'acétate de vinyle et d'éthers de vinyle, et
- la résine de revêtement est une résine durcissable.

2. Feuille selon la revendication 1, dans laquelle la composition anti-salissure est une composition d'acrylate d'uréthane de perfluoropolyéther.

3. Feuille de transfert anti-salissure selon la revendication 1 ou 2, dans laquelle la couche anti-salissure (b) est une couche obtenue à partir d'une composition anti-salissure contenant une liaison double carbone-carbone, qui comprend :
(A) un triisocyanate préparé en trimérisant un diisocyanate, et
(B) une combinaison d'au moins deux composés actifs contenant de l'hydrogène, dans laquelle (B) comprend :
(B-1) un perfluoropolyéther ayant au moins un hydrogène actif, et
(B-2) un monomère ayant un atome d'hydrogène actif et une liaison double carbone-carbone.

4. Feuille selon l'une quelconque des revendications 1 à 3, dans laquelle une couche de libération de moule (e) est présente entre la feuille de substrat (a) et la couche anti-salissure (b).

5. Feuille selon l'une quelconque des revendications 1 à 4, dans laquelle le monomère de revêtement pouvant être polymérisé est un composé contenant du silicium, un composé sans silicium, un monomère monofonctionnel ayant une liaison double carbone-carbone ou un monomère polyfonctionnel ayant au moins deux liaisons doubles carbone-carbone.

6. Processus pour produire la feuille selon l'une quelconque des revendications 1 à 5, dans lequel le processus comprend les étapes de :
- formation de la couche anti-salissure (b) en appliquant la composition anti-salissure à la feuille de substrat (a),
- formation de la couche de revêtement (c) en appliquant une composition de revêtement pouvant être polymérisée à la couche anti-salissure (b), et
- durcissement de la composition anti-salissure et de la composition de revêtement pouvant être polymérisée.

7. Processus pour produire la feuille selon l'une quelconque des revendications 1 à 5, comprenant les étapes de :
- formation de la couche anti-salissure (b) en appliquant et en durcissant la composition anti-salissure sur la feuille de substrat (a), et
- formation de la couche de revêtement (c) en appliquant et en durcissant une composition de revêtement pouvant être polymérisée à la couche anti-salissure (b).

8. Processus selon la revendication 6 ou 7, qui comprend l'étape de formation d'une couche adhésive (d) en appliquant une composition adhésive à la couche de revêtement (c) avant ou après le durcissement de la couche de revêtement (c).

9. Processus selon l'une quelconque des revendications 6 à 8, dans lequel la composition anti-salissure est une composition d'acrylate d'uréthane de perfluoropolyéther.

10. Processus selon l'une quelconque des revendications 6 à 9, dans lequel la couche anti-salissure est une couche comprenant une composition anti-salissure ayant une liaison double carbone-carbone, qui comprend :
(A) un triisocyanate préparé en trimérisant un diisocyanate, et
(B) une combinaison d'au moins deux composés actifs contenant de l'hydrogène, dans laquelle (B) comprend :
(B-1) un perfluoropolyéther ayant au moins un hydrogène actif, et
(B-2) un monomère ayant un atome d'hydrogène actif et une liaison double carbone-carbone.

11. Processus pour produire un article moulé en résine anti-salissure en utilisant la feuille selon l'une quelconque des revendications 1 à 5.

12. Processus selon la revendication 11, qui est un étiquetage au moulage.

13. Article moulé en résine pouvant être obtenu par le processus selon l'une quelconque des revendications 11 ou 12.
